## Europäisches Patentamt
## European Patent Office
## Office européen des brevets

(19)

(11) Veröffentlichungsnummer: **0 043 799**
**A1**

(12) # EUROPÄISCHE PATENTANMELDUNG

(21) Anmeldenummer: **81810266.7**

(51) Int. Cl.³: **F 24 J 3/02**

(22) Anmeldetag: **29.06.81**

(30) Priorität: **01.07.80 CH 5056/80**

(43) Veröffentlichungstag der Anmeldung: **13.01.82**
**Patentblatt 82/2**

(84) Benannte Vertragsstaaten: **AT BE CH DE FR GB IT LI LU NL SE**

(71) Anmelder: **Aroka Holding AG, Althau 489, CH-5303 Würenlingen (CH)**

(72) Erfinder: **Heierli, Werner, Elsastrasse 6, CH-4600 Olten (CH)**

(74) Vertreter: **Hepp, Dieter et al, Hepp & Partner AG Buebenloostrasse 22, CH-9500 Wil (CH)**

(54) **Sonnenkollektor und Verfahren zum Herstellen von Reflexions- und Absorptionsschichten für Sonnenkollektoren.**

(57) Der Sonnenkollektor weist einen Wärmetauscher (1) auf, der an seiner dem Strahlungsbereich zugewandten Seite mit einer Reflexionsschicht (12) für niederwellige Infrarotstrahlung versehen ist. Dadurch wird verhindert, daß Verluste durch Rückstrahlung auftreten. Zur Vermeidung von Reflexions- und Brechungsverlusten ist die Reflexionsschicht direkt und ohne Trennschicht in die Materialoberfläche des Wärmetauschers eingebettet bzw. mit dieser verbunden. Die Absorptionsschicht (11) ist in die Reflexionsschicht eingebettet. Vorteilhaft besteht der Wärmetauscher (1) aus lösbarem, temperaturbeständigem Kunststoff, insbesondere Polyphenylenoxid. Die Reflexionsschicht besteht vorteilhaft aus Polycarbonat. Durch eine Abdeckplatte (5) mit Reflexionsschicht (13) für den langwelligen Infrarotbereich läßt sich der Absorptionsgrad weiter verbessern.

Die Reflexionsschichten lassen sich einfach in einem Lösungsmittel lösen und auf die Materialoberfläche auftragen. Das Lösungsmittel ist dabei derart gewählt, daß sowohl das für die Reflexionsschicht vorgesehene Material als auch die Materialoberfläche gelöst bzw. angelöst werden.

- 1 -

AROKA HOLDING AG, 5303 Würenlingen, Schweiz

---

Sonnenkollektor und Verfahren zum Herstellen von
Reflexions- und Absorptionsschichten für Sonnenkollektoren

---

Die Erfindung betrifft einen Sonnenkollektor zum Sammeln der Wärmeenergie des Tageslichts mit einem Wärmetauscher zur Uebertragung der Wärmeenergie auf ein Medium zum Wärmetransport, wobei der Wärmetauscher ein mit wenigstens einer Absorptionsschicht für den sichtbaren Bereich und den hochenergetischen Infrarotbereich des Tageslichts versehener Körper ist.

Die Erfindung betrifft ausserdem ein Verfahren zum Auftragen von Reflexionsschichten auf die Oberfläche von Kunststoffkörpern, insbesondere an Sonnenkollektoren, welche aus einem durch ein Lösungsmittel wenigstens an der Oberfläche lösbaren Kunststoff bestehen.

Sonnenkollektoren der eingangs genannten Art finden immer breitere Anwendung. Insbesondere bei Hochtemperatur-Sonnenkollektoren besteht ein grosses Problem darin, dass die dem Tageslicht entnommene Wärmeenergie teilweise als niederwellige Infrarotstrahlung wieder vom Wärmetauscher abgestrahlt wird. Ein weiteres Problem besteht darin, dass beim Anbringen von Reflexionsschichten auf dem Wärmetauscher oder auf Reflexionsplatten grosse Verluste durch Reflexion der einfallenden Tageslichtstrahlen an den Trennschichten zwischen Reflexionsschicht und Wärmetauscheroberfläche entstehen.

Der Erfindung liegt die Aufgabe zugrunde, die Nachteile des Bekannten zu vermeiden, insbesondere also einen Sonnenkollektor und ein Verfahren zum Auftragen von Reflexions- und Absorptionsschichten zu schaffen, bei dem auf wirtschaftliche Weise die Verluste in den Reflexionsschichten minimiert und die Absorption im Wärmetauscher maximiert wird.

Erfindungsgemäss wird dies in erster Linie dadurch erreicht, dass der Wärmetauscher an seiner dem Strahlungsbereich zugewandten Seite im Molekularverbund der Materialoberfläche eine Reflexionsschicht für niederwellige Infrarotstrahlung aufweist, und dass die Reflexionsschicht ihrerseits an der dem Strahlungsbereich zugewandten Seite mit der Absorptionsschicht versehen ist. Durch die Einbringung der Reflexionsschicht in den Molekularverbund der Materialoberfläche wird vermieden, dass eine Trennschicht zwischen Reflexionsschicht und Oberfläche des Wärmetauschers entsteht, welche das einfallende Tageslicht reflektieren könnte. Durch die Einbringung der Absorptionsschicht in die Oberfläche der Reflexionsschicht wird erreicht, dass das einfallende Tageslicht in Wärmeenergie umgesetzt und in den Wärmetauscher eingeleitet wird. Niederwellige Infrarotstrahlung, die im Wärmetauschermaterial entsteht, wird jedoch an der Innenseite der Reflexionsschicht reflektiert und in den Wärmetauscher zurückgestrahlt, so dass Wärmeverluste vermieden werden.

Besonders vorteilhaft lässt sich die Absorptionsschicht herstellen, wenn diese aus einer Schicht pulverförmiger Absorptionsteilchen besteht, welche direkt in die Oberfläche der Reflexionsschicht eingebettet sind. Auf diese Weise wird einerseits die Wärmeleitung durch Reflexionsschicht in den Wärmetauscher optimiert und es werden andererseits Verluste durch Schichtübergänge vermieden.

Die Vermeidung von Trennschichten zwischen Wärmetauscheroberfläche und Reflexionsschicht lässt sich besonders zuverlässig erreichen, wenn der Wärmetauscher wenigstens an der dem Strahlungsbereich zugewandten Seite aus einem durch ein Lösungsmittel lösbaren, temperaturbeständigen Kunststoff besteht, und wenn die Reflexionsschicht in einem Gemisch auf die Oberfläche aufgetragen ist, welches das Lösungsmittel enthält.

Ersichtlicherweise wird dadurch auf besonders einfache Weise die trennschichtfreie Verwendung von Reflexionsschicht und Wärmetauscheroberfläche ermöglicht. Besonders zuverlässig lassen sich dabei Schichtenbildungen vermeiden, wenn das Gemisch, welches das Material für die Reflexionsschicht enthält, zusätzlich den gleichen Kunststoff enthält, aus dem der Wärmetauscher besteht.

Es hat sich gezeigt, dass sich Wärmetauscher besonders vorteilhaft aus Polyphenylenoxid herstellen lassen, und dass sich ausserdem dieser Kunststoff besonders vorteilhaft zur Beimischung zu Materialien für Reflexionsschichten eignet. Als Material für Reflexionsschichten hat sich überraschenderweise Polycarbonat besonders bewährt, wobei dieser Kunststoff den weiteren Vorteil aufweist, dass er sich mit dem Wärmetauscher-Kunststoff Polyphenylenoxid hervorragend verbindet.

. Besonders gute Ergebnisse lassen sich auch erreichen, wenn die Reflexionsschicht Acrylat aufweist.

Hervorragend geeignet zum Einbetten in die Oberfläche der Reflexionsschicht, bzw. der Absorberoberfläche eignet sich gebrochenes Siliciumcarbid.

Der Absorptionsgrad lässt sich weiter verbessern, wenn ein Gemisch aus Russ und Siliciumcarbid und/oder Metalloxid in die Reflexionsschicht eingebettet wird.

Der Absorptionsgrad des Sonnenkollektors lässt sich weiter verbessern, wenn bei Verwendung einen transparenten Abdeckplatte im

- 4 -

Abstand von der Oberfläche des Wärmetauschers die Abdeckplatte eine zweite, dem Wärmetauscher zugewandte Reflexionsschicht für den langwelligen Infrarotbereich aufweist. Infrarotstrahlung, welche aus dem Wärmetauscher austritt oder von diesem reflektiert wird, wird auf diese Weise wieder zurückgeworfen und im Absorber in Wärmeenergie umgewandelt.

Besonders bewährt hat sich als Material für die Abdeckplatte Polycarbonat. Als Reflexionsschicht bietet Kupfer und/oder Schwefel hervorragende Ergebnisse.

Besonders vorteilhaft lässt sich die Reflexionsschicht mit einem Lösungsmittel auf die Oberfläche der Abdeckplatte auftragen, wenn das Lösungsmittel struktural das gleiche Polycarbonat enthält, wie die Abdeckplatte. Auf diese Weise wird die Bildung einer Zwischenschicht weitestgehend vermieden, so dass das einfallende Tageslicht ungehindert passieren kann und lediglich die zu reflektierenden langwelligen Infrarotstrahlen auf den Wärmetauscher zurückgeworfen werden.

Besonders vorteilhaft hat sich ein Verfahren zum Auftragen der Reflexionsschichten auf die Oberfläche von Kunststoffkörpern bewährt, wenn dabei das Reflexionsschichtmaterial mit einem Lösungsmittel vermischt und derart auf die Kunststoffkörper aufgetragen wird, dass die Reflexionsschicht mit der angelösten Oberfläche des Kunststoffkörpers vermischt und beim Trocknen in dieser eingebettet wird.

Ersichtlicherweise ist diese Art der Auftragung von Reflexionsschichten nicht auf die Herstellung von Sonnenkollektoren beschränkt, sondern kann vorteilhaft überall da eingesetzt werden, wo die Reflexion von Strahlungen einer bestimmten Wellenlänge einerseits und ungehinderter Durchtritt von Strahlen einer bestimmten Wellenlänge andererseits gewährleistet werden soll. Dies bietet sich z.B. auch bei Folien zur Wärmedämmung von Fenstern an, bei denen das Tageslicht ungehindert in den Raum einfallen soll (unter Vermeidung von etwaigen Reflexionen an Trennschichten zwischen Reflexionsschicht und Trägerschicht) und Wärmestrahlung aus dem Raum durch eine Reflexionsschicht verhindert werden soll.

Zum Auftragen der Reflexionsschicht auf einen Körper aus Polycarbonat eignet sich in ganz besonderer Weise als Lösungsmittel Methylenchlorid. Zum Auftragen von Polycarbonat als Material für die Reflexionsschicht auf einen Absorptionskörper aus Polyphenylenoxid eignet sich hervorragend ein Lösungsmittel, welches zwischen 25 und 60 Gew.% Trichloraethylen, 20 bis 40 Gew.% Methylenchlorid und 10 bis 40 Gew.% Aethylendichlorid enthält.

Ersichtlicherweise werden der erfinderische Inhalt und der technische Fortschritt des Anmeldungsgegenstands nicht nur durch die neuen Einzelmerkmale, sondern insbesondere auch durch die Kombination und Unterkombination aller Anwendung findenden Merkmale gewährleistet.

Die Erfindung ist im folgenden in einem Ausführungsbeispiel anhand der Zeichnungen näher erläutert. Es zeigen:

Fig. 1      Einen Querschnitt durch einen Sonnenkollektor mit den Merkmalen der Erfindung,

Fig. 2      den schematischen Strahlungsverlauf, bzw. Reflexionsverlauf am Sonnenkollektor gemäss Fig. 1,

Fig. 3      eine schematische Darstellung des Oberflächenaufbaus des Wärmetauschers gemäss Fig. 1,

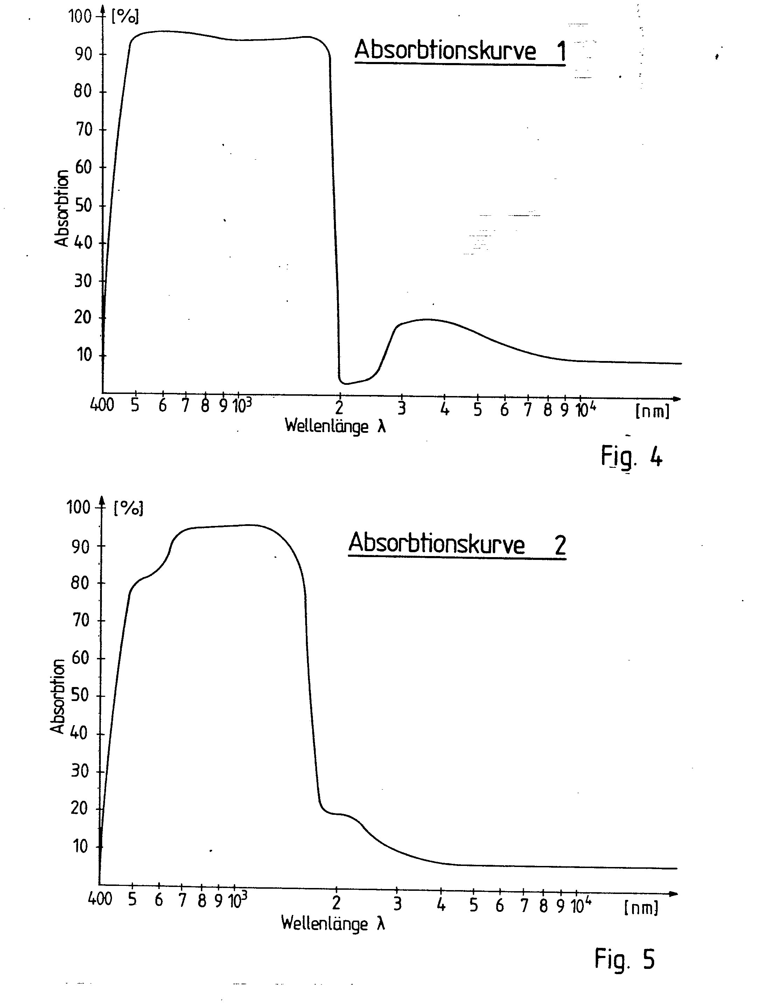

Fig. 4 u. 5 Absorptionskurven bei Verwendung verschiedener Reflexionsschichten.

0043799

- 6 -

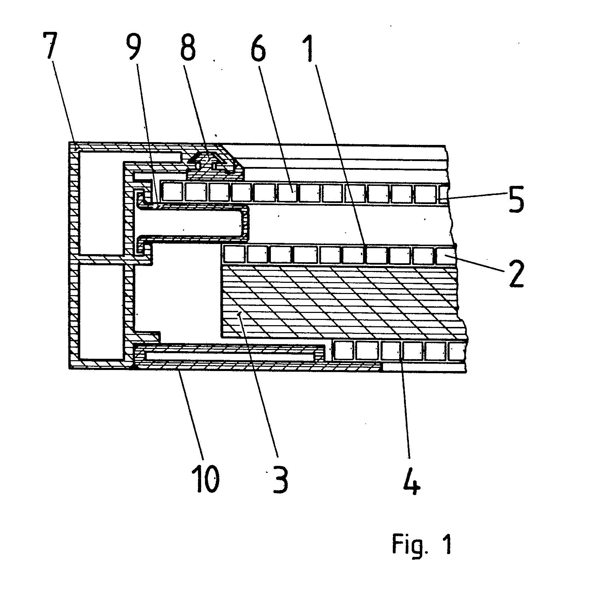

Gemäss Fig. 1 weist der im Querschnitt ausschnittsweise dargestellte Sonnenkollektor einen Wärmetauscher 1 auf, dessen lamellenartig ausgebildete Hohlräume 2 in bekannter Weise durch ein
Wärmetransportmedium durchflossen werden. Der Wärmetauscher 1
ist auf seiner Rückseite durch eine Isolationsmatte 3, die durch
eine Stützplatte 4 gehalten wird, gegen Wärmeabstrahlung geschützt. In Richtung des Lichteinfalls ist der Wärmetauscher
durch eine transparente Abdeckplatte 5 geschützt, die als Stegplatte ausgebildet ist und in deren Hohlräumen 6 sich Luft oder
ein anderes wärmeisolierendes, transparentes Medium befinden
kann. Die gesamten Bauteile, also Wärmetauscher 1, Abdeckplatte
5, Isolationsmatte 3 und Stützplatte 4 werden durch eine Rahmenanordnung 7, sowie Abstands- und Dichtelemente 8, 9 und 10 in
der gewünschten Relativlage zueinander gehalten.

Im Betrieb wird in bekannter Weise das durch die transparente
Abdeckplatte 5 hindurchfallende Tageslicht im Wärmetauscher 1 in
Wärmeenergie umgewandelt und diese durch die Hohlräume 2 mittels
des Wärmetauschermediums abgeführt.

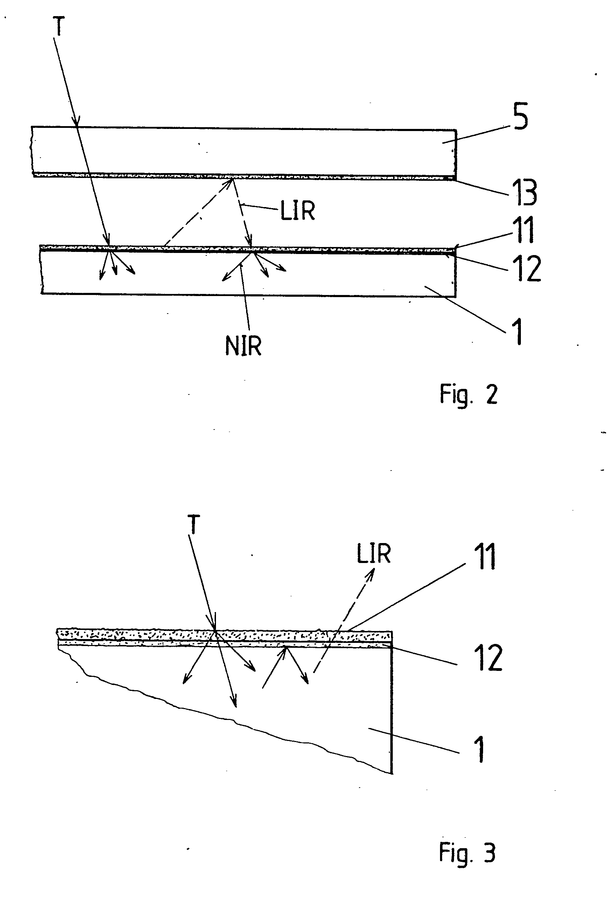

Fig. 2 und 3 zeigen Wärmetauscher 1 und Abdeckplate 5 schematisch und in Vergrösserung, wobei der Strahlungsverlauf angedeutet ist. Demnach fällt der Gesamtanteil des sichtbaren Tageslichts T durch die Abdeckplatte 5 auf den Wärmetauscher 1. Dieser ist auf der Oberseite mit einer Absorptionsschicht 11 versehen, welche aus einer Schicht pulverförmiger Absorptionsteilchen
besteht, die in die Oberfläche des Wärmetauschers 1 eingebettet
sind, wie nachstehend noch ausführlich beschrieben wird.

Im Materialverbund der Wärmetauscheroberfläche ist ausserdem
eine Reflexionsschicht vorgesehen, welche niederwellige Infrarotstrahlung (NIR) reflektiert. Durch die Einbettung der pulverförmigen Teilchen der Absorptionsschicht in die Oberfläche des
Wärmetauschers, bzw. der Reflexionsschicht 12 wird optimal einfach erreicht, dass die durch die Absorptionsteilchen in Wärme-

- 7 -

energie umgewandelte Energie des einfallenden Tageslichts im Wärmetauscher verbleibt und nicht in Form niederwelliger Infrarotstrahlung teilweise wieder abgestrahlt wird.

Die Abdeckplatte 5 bewirkt ausserdem, dass eine im Bereich zwischen dem Wärmetauscher 1 und der Unterseite der Abdeckplatte 5 auftretende Erwärmung durch nicht reflektierte niederwellige Infrarotstrahlung gegenüber der Umgebung isoliert wird und verhindert insbesondere auch, dass bei niederen Umgebungstemperaturen der Wärmetauscher 1 direkt abgekühlt würde. Auf der Unterseite der Abdeckplatte 5 ist ausserdem eine Reflexionsschicht 13 für langwellige Infrarotstrahlung (LIR) vorgesehen, welche derartige Strahlen, die vom Wärmetauscher 1 abgestrahlt werden können, auf letzteren zurückwirft. Die Reflexionsschicht 13 für den langwelligen Infrarotbereich ist wie die Reflexionsschicht 12 für den kurzwelligen Infrarotbereich in die Materialoberfläche der Abdeckplatte 5, bzw. des Wärmetauschers 1 integriert und ohne Trennschicht praktisch einstückig ausgebildet.

Auf diese Weise wird verhindert, dass einfallendes Tageslicht T an Trennschichten reflektiert oder gebrochen wird, womit auf optimal einfache Weise Verluste vermieden werden.

Nachstehend wird anhand von Beispielen erläutert, wie sich das erfindungsgemässe Verfahren zum Aufbringen der Reflexions- und Absorptionsschichten 11, 12, und 13 durchführen lässt:

Beispiel 1:
Eine Wärmetauscherplatte aus Polyphenylenoxid wird in den entsprechenden Dimensionen zugeschnitten und die Oberfläche wird einwandfrei entfettet und mit den an sich bekannten Verfahren gereinigt.

Es werden sodann 65 g PMMA Polymethyl-Methacrylat in 1 kg Trichloraethylen gelöst. Dann werden 40 g PC Polycarbonat in 0,6 kg

- 8 -

Methylenchlorid und 0,4 kg Aethylendichlorid gelöst. Die beiden Lösungen werden zusammengegossen und im Hochdruckverfahren ohne Pressluft 0,08 bis 0,15 mm dick auf die PPO Platte aufgesprüht.

Das Deluat löst die PPO Platte an. Dadurch entsteht ein Molekularverbund zwischen der PPO Platte und PC mit PMMA, welche die Reflexionsschicht 12 bilden.

Bevor diese Lösung antrocknet, wird im Turboverfahren ein Gemisch von HCC Russ, Grinding 0,9 bis 0,6 u gemischt mit 15% Nickeloxid schwarz, Grinding 0,2 bis 0,5 u in die Reflexionsschicht eingebettet.
Die Lösungsverhältnisse können gegebenenfalls in einem Bereich bis zu +/- 30% verändert werden.

Eine Abdeckplatte 5 aus Polycarbonat wird zugeschnitten und in üblicher Weise gereinigt.

5 g Kupfersulfat Cu $SO_4$ werden in 1 kg Methanol $CH_3OH$ gelöst.
Die Lösung wird im Spritzverfahren auf eine Seite der Polycarbonatplatte aufgespritzt.
Der sich bindende Film wird bei 140° C eine Stunde getrocknet.

Dann werden 70 g Polycarbonat in 1 kg Methylenchlorid gelöst und im Hochdruckverfahren als Deckschicht auf die PC Platte aufgetragen.
Diese Schicht wird 1 Std. bei 90° C getrocknet.
Damit wird eine absolut korrosionssichere Abdeckung erreicht.
Die so präparierte Platte reflektiert IR Strahlen von ca. 8'000 bis 32'000 nm.

Zur Herstellung der Abdeckplatte 5 mit Reflexionsschicht 13 kann auch wie folgt verfahren werden:

10,2 g Kupfersulfat Cu $So^4$ in 1 kg Methanol $CH_3OH$ bei Raumtemperatur gelöst.
10 kg Polycarbonat PC Granulat werden damit durch Anlösen geliert und im Anschluss daran bei 230° C vier Stunden getrocknet.
Nach der Extrusion einer 0,6 mm starken PC Doppelstegplatte reflektiert diese IR Strahlen über 10'000 bis ca. 25'000 nm.

Die Absorptionskurven 1 und 2 zeigen, welche Eigenschaften ein nach diesem Beispiel hergestellter Sonnenkollektor aufweist. Dabei entspricht die Kurve 1 der zweiten Variante zur Herstellung der Abdeckplatte und die Kurve 2 dem ersten Beispiel zur Herstellung der Abdeckplatte.


Beispiel 2:
Zur Herstellung einer Wärmetauscherplatte mit Absorptionsschicht 11 und Reflexionsschicht 12 wird rein verfahrensmässig wie beim Beispiel 1 vorgegangen. Es werden jedoch 110 g PC in 0,5 kg Methylenchlorid und 0,35 kg Aethylendichlorid und 0,15 kg Trichloraethylen aufgelöst.

Als Absorptionsschicht werden 15% Siliciumcarbid Grinding 1,5 u und 85% HCC Aethylenruss Grinding 0,6 bis 0,9 u im Turboverfahren aufgetragen.

Auch hier sind in bestimmten Fällen Variationen im Rahmen von +/- 20% zur Anpassung an besondere Bedingungen möglich.

0043799

- 10 -

<u>PATENTANSPRÜCHE</u>

1. Sonnenkollektor zum Sammeln der Wärmeenergie des Tageslichts mit einem Wärmetauscher zur Übertragung der Wärmeenergie auf ein Medium zum Wärmetransport, wobei der Wärmetauscher ein mit wenigstens einer Absorptions-Schicht für den sichtbaren Bereich und den hochenergetischen Infrarot-Bereich des Tageslichts versehener Körper ist, d a d u r c h  g e - k e n n z e i c h n e t, dass der Wärmetauscher an seiner dem Strahlungsbereich zugewandten Seite im Molekularverband der Materialoberfläche eine Reflexionsschicht für niederwellige Infrarotstrahlung aufweist, und dass die Reflexionsschicht ihrerseits an der dem Strahlungsbereich zugewandten Seite mit der Absorptionsschicht versehen ist.

2. Sonnenkollektor nach Anspruch 1, d a d u r c h  g e k e n n - z e i c h n e t, dass die Absorptionsschicht aus einer Schicht Absorptionsteilchen besteht, welche direkt in die Oberfläche der Reflexionsschicht eingebettet sind.

3. Sonnenkollektor nach Anspruch 1 oder 2, d a d u r c h g e k e n n z e i c h n e t, dass der Wärmetauscher wenig- stens an der dem Strahlungsbereich zugewandten Seite aus einem durch ein Lösungsmittel lösbaren, temperaturbeständigen Kunststoff besteht, und dass die Reflexionsschicht in einem Gemisch auf die Oberfläche aufgetragen ist, welches das Lösungsmittel enthält.

4. Sonnenkollektor nach Anspruch 3, d a d u r c h  g e k e n n - z e i c h n e t, dass das Gemisch den gleichen Kunststoff enthält, aus dem der Wärmetauscher besteht.

5. Sonnenkollektor nach Anspruch 3 oder 4, d a d u r c h g e k e n n z e i c h n e t, dass der Kunststoff Poly- phenylenoxid ist.

6. Sonnenkollektor nach einem der vorangehenden Ansprüche, dadurch gekennzeichnet, dass die Reflexionsschicht Polycarbonat aufweist.

7. Sonnenkollektor nach einem der Ansprüche 1 bis 5, dadurch gekennzeichnet, dass die Reflexionsschicht Acrylat aufweist.

8. Sonnenkollektor nach einem der vorangehenden Ansprüche, dadurch gekennzeichnet, dass die Absorptionsschicht gebrochenes Siliziumcarbid aufweist.

9. Sonnenkollektor nach einem der vorangehenden Ansprüche, dadurch gekennzeichnet, dass die Absorptionsschicht ein Gemisch aus Russ und Siliziumcarbid und/oder Metalloxiden enthält.

10. Sonnenkollektor nach einem der vorangehenden Ansprüche, mit einer transparenten Abdeckplatte, die vorzugsweise im Abstand von der Oberfläche des Wärmetauschers angeordnet ist, dadurch gekennzeichnet, dass die Abdeckplatte wenigstens eine zweite, dem Wärmetauscher zugewandte Reflexionsschicht für den langwelligen Infrarot-Bereich aufweist.

11. Sonnenkollektor nach einem der vorangehenden Ansprüche, dadurch gekennzeichnet, dass die Abdeckplatte aus Polycarbonat besteht.

12. Sonnenkollektor nach Anspruch 10 und 11, dadurch gekennzeichnet, dass die zweite Reflexionsschicht Kupfer und/oder Schwefel aufweist.

13. Sonnenkollektor nach Anspruch 12, d a d u r c h g e k e n n z e i c h n e t, dass die zweite Reflexions- schicht mit einem Lösungsmittel auf die Oberfläche der Abdeckplatte aufgetragen ist, welches struktural das gleiche Polycarbonat enthält wie die Abdeckplatte.

14. Verfahren zum Auftragen von Reflexionsschichten auf die Oberfläche von Kunststoff-Körpern, insbesondere an Sonnenkollektoren gemäss Anspruch 1, welche aus einem durch ein Lösungsmittel wenigstens an der Oberfläche lösbaren Kunst- stoff bestehen, d a d u r c h g e k e n n z e i c h n e t, dass das Reflexionsschicht-Material mit dem Lösungsmittel vermischt und derart auf die Kunststoffkörper aufgetragen wird, dass die Reflexionsschicht mit der angelösten Oberfläche des Kunststoffkörpers vermischt und beim Trocknen in dieser eingebettet wird.

15. Verfahren nach Anspruch 14 zum Auftragen auf einen Körper aus Polycarbonat und/oder Polyphenylenoxid, d a d u r c h g e k e n n z e i c h n e t, dass das Lösungsmittel Methy- lenchlorid und/oder Aethylendichlorid und/oder Trichloraethylen enthält.

16. Verfahren nach Anspruch 15 zum Auftragen von Polycarbonat als Reflexionsschicht auf Polyphenylenoxid, d a d u r c h g e k e n n z e i c h n e t , d a s s das Lösungsmittel 25 bis 60 Gew.% Trichloraethylen, 20 bis 40 Gew.% Methylenchlorid und 10 bis 40 Gew.% Aethylendichlorid enthält.

17. Verwendung eines Gemischs enthaltend wenigstens zwei der Komponenten Methylenchlorid und/oder Aethylendichlorid und/ oder Trichloraethylen und gelöst in diesen Komponenten Polyphenylenoxid, Polycarbonat und/oder Acrylat als Vorprodukt zur Herstellung einer IR-Strahlen reflektierenden Verbundschicht auf einen Körper aus Polyphenylenoxid.

0043799

18. Verwendung eines Gemischs enthaltend wenigstens zwei der Komponenten Methylenchlorid und/oder Aethylendichlorid und/oder Trichloraethylen und gelöst in diesen Komponenten Polyphenylenoxid, Polycarbonat und/oder Acrylat als Vorprodukt zur Herstellung einer IR-Strahlen reflektierenden Verbundschicht auf einen Körper aus Polycarbonat.

Fig. 1

T

5

13

LIR

11
12

1

NIR

Fig. 2

T

LIR

11

12

1

Fig. 3

0043799

- 3 -

Absorbtionskurve 1

Fig. 4

Absorbtionskurve 2

Fig. 5

Europäisches
Patentamt
Nummer der Anmeldung

EP 81 81 0266

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 201 189 (SAUNDERS)<br>* Spalte 5, Zeilen 63-68; Spalte 6, Zeilen 1-7; Figur 1 *<br><br>-- | 1,2 |
| | US - A - 4 037 014 (GITTLEMAN)<br>* Spalte 1, Zeilen 57-68; Spalte 2, Zeilen 1-16; Figur 1 *<br><br>-- | 1 |
| | DE - A - 2 840 021 (KOSTER)<br>* Seite 4, letzter Absatz; Seite 5, erster Absatz; Figur 2 *<br><br>-- | 1 |
| | US - A - 4 098 956 (BLICKENSDER-FER)<br>* Spalte 2; Figur 1 *<br><br>-- | 1 |
| | US - A - 3 981 293 (GILLERY)<br>* Spalte 2, Zeilen 38-68; Figur 1 *<br><br>-- | 1,10 |
| | CH - A - 472 461 (G.E. CO.)<br>* Spalte 2, Zeile 17 - Spalte 3, Zeile 61 *<br><br>-- | 3,4,6, 7,13-15 |
| | DE - A - 2 734 604 (D.G.S.S.R.)<br>* Seite 2, Zeilen 8-19 *<br><br>-- | 9 |
| | ./. | |

### KLASSIFIKATION DER ANMELDUNG (Int. Cl.3)

F 24 J 3/02

### RECHERCHIERTE SACHGEBIETE (Int. Cl.3)

F 24 J
B 05 D

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-10-1981 | PERROTTA |

EPA form 1503.1 06.78

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | **EINSCHLÄGIGE DOKUMENTE** | | |
| | FR - A - 1 577 997 (G.N.I.E.I.I.K.)<br>* Seite 2, Zeilen 25-44; Seite 3, Zeilen 1-5; Figur 1 *<br><br>-- | 10 | |
| | FR - A - 2 428 215 (SCHWOBB)<br>* Seite 4, Zeilen 12-17; Figur 1 *<br><br>-- | 11 | |
| A | DE - A - 2.815.746 (L.W.A.G.)<br>* Insgesamt *<br><br>---- | | RECHERCHIERTE SACHGEBIETE (Int. Cl. 3) |

EPA Form 1503.2   06.78